# EUROPEAN PATENT SPECIFICATION

(11) **EP 4 494 956 B1**
(45) Date of publication and mention of the grant of the patent: **20.05.2026**
(21) Application number: 24189346.0
(22) Date of filing: 18.07.2024
(51) Int. Cl.: B60T 13/74, F16D 65/18

(54) **COMPACT ACTUATOR FOR ELECTRIC PARKING BRAKE**
KOMPAKTER AKTUATOR FÜR ELEKTRISCHE FESTSTELLBREMSE
ACTIONNEUR COMPACT POUR FREIN DE STATIONNEMENT ÉLECTRIQUE

(30) Priority: 19.07.2023 IT 202300015114
(43) Date of publication of application: 22.01.2025
(73) Proprietor: Cofle S.p.A., 20056 Trezzo Sull'adda (MI) (IT)
(72) Inventor: BARBIERI, Walter, 24040 Filago (BG) (IT)
(74) Representative: Dragotti & Associati S.P.A.

(56) References cited:
- WO-A1-2008/046605
- US-A1- 2012 234 640
- US-A1- 2013 087 417
- US-A1- 2013 087 422
- US-A1- 2022 325 796

## Description

The present invention refers to a compact actuator for an electric parking brake.

The subject of the present invention relates to the field of application of parking brake actuators which can be operated by means of an electric motor. These devices are called parking brakes by those skilled in the art and are of course widely used in motor vehicles.

Starting from the earliest applications in this field of the art, parking brakes were operated by cables and the driver and/or user of the motor vehicle to which they were applied had to exert a certain muscular force to achieve their operation.

In contrast, in more advanced applications, the brakes are now operated by an electric motor and primarily have the advantage of avoiding this action by the driver and/or user of the motor vehicle. Furthermore, this type of brake also has the advantage that it can be inserted into the electric-electronic controls found on board most modern motor vehicles. As mentioned, such parking brakes are commonly operated by means of an actuator, which has an electric motor associated therewith. Their operation can consist of several steps or actions, and furthermore the reduction assembly can be made by means of different gear technologies.

Gear assemblies are known in this regard which are conceived as belt gears, worm gears, cylindrical gears or planetary gears, etc.

Examples of such actuators are illustrated in patent EP 2081806.

The assemblies developed so far are quite complex and sometimes not completely reliable in terms of operation. Furthermore, they have a certain bulk which does not facilitate the placement thereof on board the vehicle.

Due to their relatively large number of components, they entail complexities in terms of construction and relative costs, assembly problems given their bulk, and sometimes even a certain amount of noise from the set.

Their assembly requires great precision for the connection and meshing of the parts, which are generally complex to produce and require greater attention to quality control, increasing costs.

Furthermore, brake actuators are subject to increasing requirements in terms of resistance to shock, vibration, corrosion and high temperatures. Under all operating conditions, the mechanical strength of the drivetrain should be as constant as possible in order to provide reproducible locking forces.

The known operating assemblies do not always have good mechanical efficiency and sometimes have clearance which disturbs the proper functioning thereof.

US2013/087417 discloses an electric disc brake in which driving force of an motor is transmitter to a gear unit in a serial manner with a cycloid reducer.

US2013/087422 discloses an electric parking brake which is operated by a motor and a cycloid reducer.

The general aim of the present invention is to make an actuator for an electric parking brake capable of solving the aforementioned drawbacks of the prior art in an extremely simple, economical and particularly functional manner.

Another aim of the present invention is to make an actuator for an electric parking brake which is particularly compact, of simple structure, with a minimised number of parts and low manufacturing costs.

Another aim of the present invention is to make an actuator for an electric parking brake which can be easily applied to any type of vehicle and has a certain regularity and reliability in its functioning.

The aforesaid aims are achieved by a compact actuator for an electric parking brake made according to independent claim 1 and the following dependent claims.

The structural and functional characteristics of the present invention and its advantages over the art will be even clearer and more evident from an examination of the following disclosure, referring to the attached schematic drawings, which show an example embodiment of the invention itself. In the drawings:
- figures 1 and 1A show an exploded perspective view in the longitudinal direction showing an embodiment of an actuator for an electric parking brake according to the invention, associated with an electric motor;
- figure 2 shows an exploded perspective view in longitudinal direction showing the actuator part of the aforesaid embodiment of an actuator for an electric parking brake according to the invention;
- figure 3 is a plan view from above of the actuator alone, shown in figure 2 when assembled;
- figure 4 shows a raised sectional view in the longitudinal direction showing the actuator for an electric parking brake shown in figure 1A according to the invention, associated with the electric motor;
- figure 5 shows a partially exploded raised section of the actuator part of figure 4;

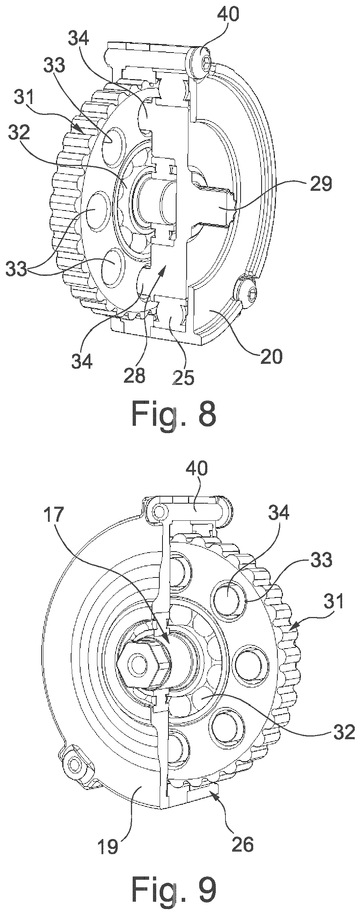

- figures 6 to 9 are perspective views of some parts of the actuator shown in the previous figures so as to highlight all the component parts when engaged with each other;

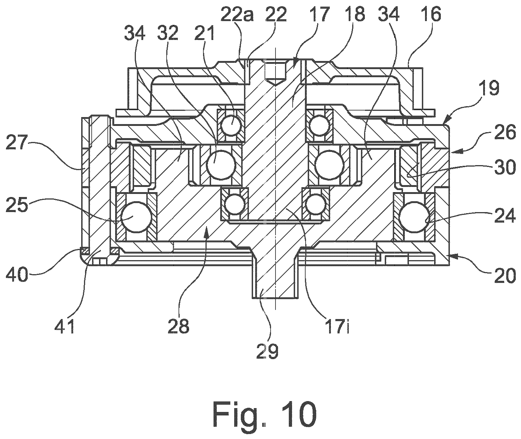

- figure 10 shows a mounted raised section of what is shown in figure 5 made in a different axial position so as to better show the interior thereof. For the illustration of the drawings, use is made in the following description of identical numerals to indicate construction elements with the same function. Further, for illustration clarity, some numerical references may not be repeated in all the figures.

Indications such as "vertical" and "horizontal", "upper" and "lower" (in the absence of other indications) are to be read with reference to the assembly (or operating) conditions and with reference to the normal terminology used in current language, where "vertical" indicates a substantially parallel direction to that of the gravitational force vector "g" and horizontal to a direction perpendicular thereto.

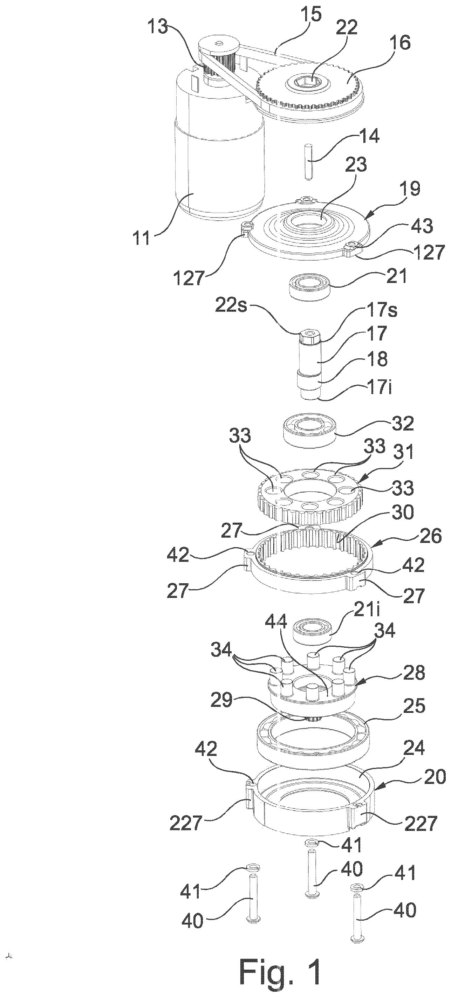

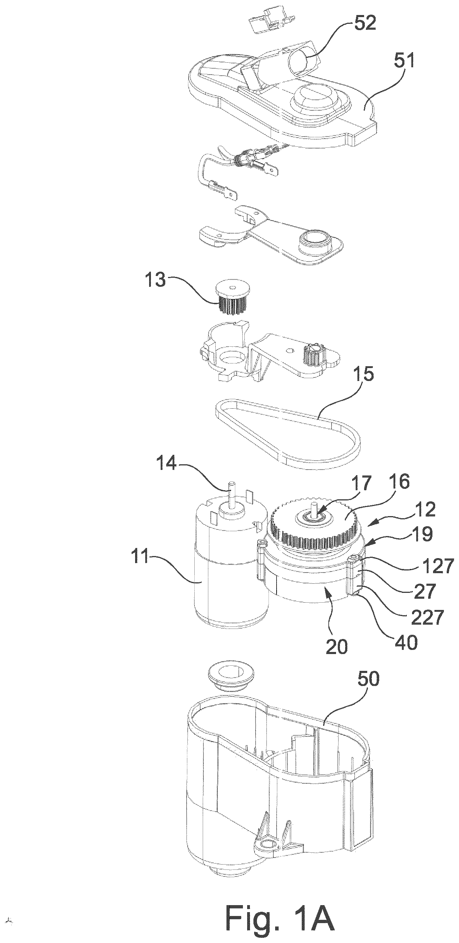

With reference to figures 1 and 1A, an illustrative and non-limiting embodiment of a compact actuator for an electric parking brake according to the present invention is shown.

In particular, figure 1 shows an electric motor 11 which, upon receiving an impulse from a control unit of a vehicle such as a passenger car or agricultural vehicle, generally operates the actuator according to the invention, overall indicated with 12. Such an arrangement involves a motor pulley 13 which is keyed to a drive shaft 14 of the electric motor 11 and transfers the rotational motion by means of a toothed belt 15 to a toothed pulley 16 (to obtain a drive) arranged on a shaft 17 in input to the actuator 12. Alternatively, the drive could also be obtained by means of a chain and relative pulley or even by means of a set of gear pairs. In the example, such a toothed pulley 16 is arranged keyed on the shaft 17 by means of a shaped hole 22 thereof which receives an upper end of the shaft 17 which is complementarily shaped in 22a.

This thereby creates a reduction gear ratio.

It should be noted that such a shaft 17 is a shaft provided with a formation or eccentric portion 18 in an intermediate portion thereof in the example illustrated. In few words, such a shaft 17 can be provided with at least one eccentric formation in order to have a proper functioning of a cycloidal assembly, which will be seen below.

It should also be noted that such an actuator 12 provides an upper cover 19 and a lower cover 20 which contain the various parts of the actuator itself, i.e., the cycloidal assembly.

The upper cover 19 receives in a housing or bore 23 thereof a bearing or bushing 21, which allows a regular guiding and rotation of the shaft 17 and eliminates friction between the various components.

The upper cover 19 has a fairly flattened shape while the lower cover 20 has a cup or bell shape.

Thereby, the lower cover 20 houses in a recessed seat 24 thereof a guide bearing 25 for a disc formation 28. A shaft extension 29 extends from said disc formation 28 downwards towards the lower cover 20, passing therethrough, and such a shaft extension 29 makes the output shaft of the actuator 12. Such a shaft extension 29, in addition to being made in a single piece with the disc formation 28 as in the example shown, could be made in a separate part which is made integral with the disc formation 28. This would allow to have output shafts of various shapes and sizes in the form of a 'torx' key of varying design based on the chosen application.

The disc formation 28 is thus housed inside the lower cover 20 and rotates centred therein.

According to the present invention, a central crown 26 is also included, which is provided with three lobes 27 or prismatic reliefs, radially projecting outwards therefrom, and which is provided with internal teeth 30. Such internal teeth 30 face a gear pair 31 having a smaller diameter than the internal diameter of the teeth 30. Furthermore, such a gear pair 31 has a thickness which is not greater than that of the central crown 26 and is arranged therein. Such an arrangement identifies the cycloidal assembly according to the present invention.

More precisely, such a gear pair 31 with the interposition of a bearing 32 is arranged on the eccentric portion 18 of the shaft 17 and is driven to rotate the shaft 17 with cycloidal motion.

It should also be noted that the gear pair 31 in the form illustrated has a body with eight through holes 33 within which eight pins 34 are arranged, extending from the aforementioned disc formation 28 which, as already mentioned, extends downwards towards the lower cover 20 in the shaft extension 29.

The shaft 17 receives the motion the from pulley 16 and transfers it to the gear pair 31 through its eccentric formation 18.

This reduction assembly enables the guided rotation of the gear pair 31 inside the central crown 26 provided with internal teeth 30 with a cycloidal motion.

As seen above, the arrangement of the bearings allows a guided and friction-free rotation.

It is also noted that the eight pins 34 inserted in the through holes 33 of the gear pair 31 'drag' them, viz., roll them in cycloidal motion on the inner teeth 30 of the central crown 26 due to the provision of the formation or eccentric portion 18 on the shaft 17.

In fact, through the motion received from the eccentric shaft 17 with cycloidal motion, such a gear pair drags the eight pins 34 arranged on the disc formation 28 with shaft extension 29 which obtain, as mentioned, the actual output shaft of the actuator.

It should be noted that this real output shaft by means of the eight pins 34 is dragged by the gear pair 31 in a rotary motion which then generates the final reduction, which for example can have a reduction ratio of 1:35, e.g., with an eccentricity of approximately 2 mm. In a developed embodiment, as depicted in the figures, the eccentricity is 0.61 obliged to have 1:35 with full cycloid

As is evident from the figures, the actuator or otherwise referred to as reducer 12 mainly consists of three axially very small stages, arranged in a pack or stacked together in a manner reminiscent of a sandwich of slight height. The three functional elements are crossed by a single shaft 17 which carries an eccentric formation 18 or eccentric profile in the central stage area.

The three aforesaid functional elements are:
- the lower cover 20 supporting a lower end 17i of the shaft 17 with a bearing 21i interposed inside a recessed seat 44 of the disc formation 28;
- the upper cover 19 which supports the drive and which houses the bearing 21 supporting a portion of the shaft 17 next to the other upper end 17s of the shaft 17;
- the central crown 26 provided with lobes or prismatic reliefs 27 (arranged between the lower cover 20 and the upper cover 19) which contains the cover gear pair 31 mounted on the eccentric formation 18 of the shaft 17.

The lower 20 and upper 19 covers self-centre on the central crown 26 by means of a frontal circular coupling between crown and covers.

For example, such a coupling has a low overlap height (just over 0.5mm deep). Overlap height is intended as the amount by which the male centring pieces obtained on the opposite faces of the crown enter the seats (female centring pieces) present on the faces coupling with the crown, of the upper and lower covers, respectively.

In fact, the dimensioning in this specific case is fully sufficient to ensure the function explained above. Furthermore, it facilitates a quick and precise assembly, as well as allowing miniaturisation to be carried out on the components with an eccentricity of only 0.61mm.

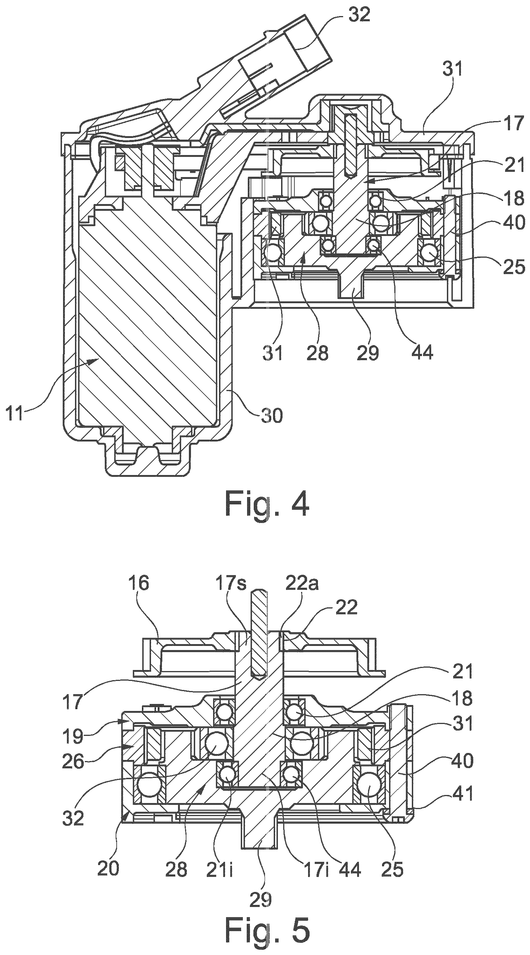

Of course, as is evident from the figures, e.g., well shown in figure 5, screws 40 provided with relative washers 41 lock the above-mentioned three functional elements, viz., lower cover 20, upper cover 19 and central crown 26 provided with lobes 27. It is in fact in holes 42 provided in the lobes 27 of the central crown 26, after passing through holes 42 of lobes 227 of the lower cover 20, through which screws 40 pass to lock in threaded holes 43 obtained in the upper cover 19, e.g., in lobes 127 of the same cover, corresponding and aligned with the other lobes 27 and 227 mentioned above.

Figure 1A shows the placement of such an actuator 12 together with the electric motor 11 inside a casing 50 and 51 in two halves, of different shapes and sizes, also illustrating an inlet opening 52 located in the upper half 51 through which an electrical connector of the motor supply system passes. The connector can also be in the lower part.

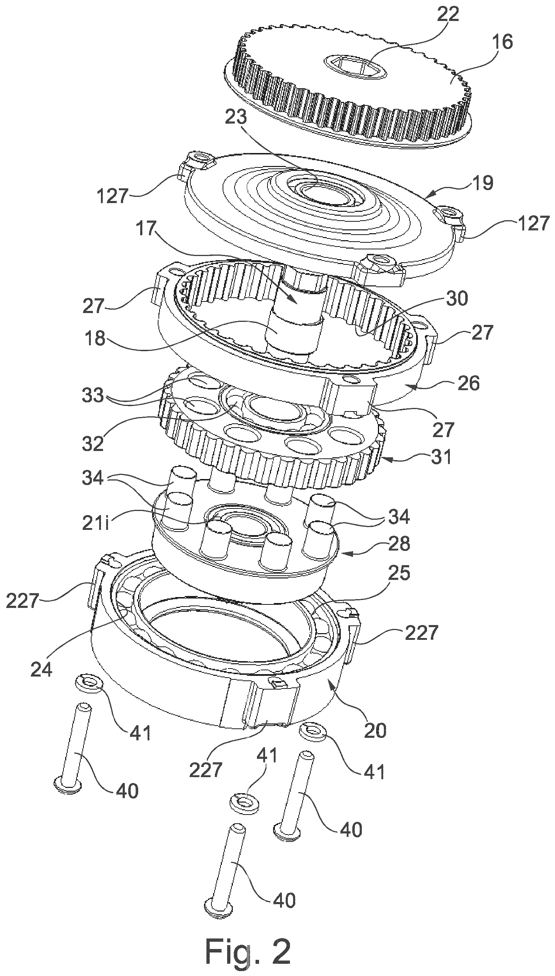

Figure 2 shows the essential parts described above in an enlarged perspective view.

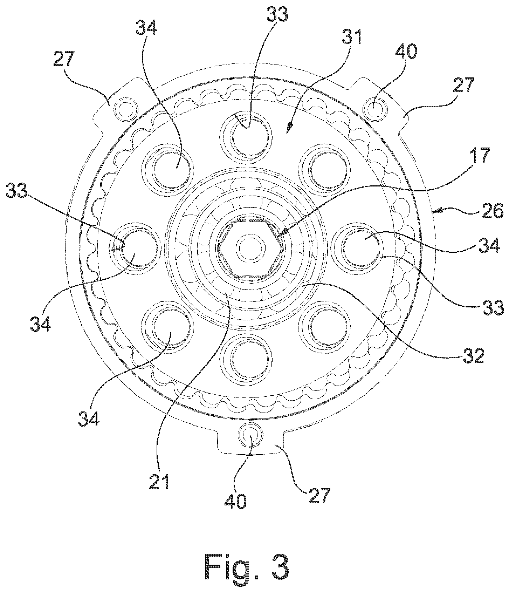

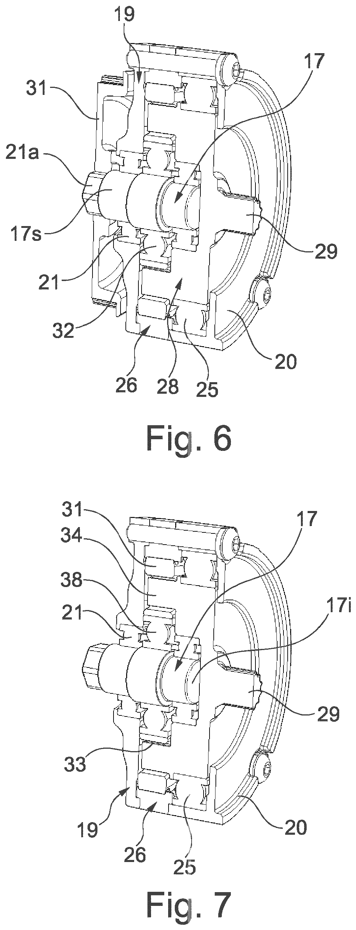

Figures 3-7 show sectioned plan views, transverse sections and variously sectioned perspective parts of what was shown in figures 1 and 1A. The plan section in figure 3 shows, for example, the contacts between the gear pair 31 and the inner teeth 30 of the central crown 26 in a certain position, as well as between the pins 34 and the holes 33 obtained in the body of the gear pair 31.

This is one of the embodiments identifying an actuator for an electric parking brake that is capable of solving the aforementioned drawbacks of the prior art in an extremely simple, economical and particularly functional manner.

Furthermore, an actuator for an electric parking brake according to the present invention is particularly simple, with the number of parts reduced to a minimum and low manufacturing costs.

It is further noted that an actuator for an electric parking brake according to the present invention is easy to apply and has a certain regularity and reliability in its functioning.

Advantageously, the arrangement made according to the present invention allows a distribution of internal radial constraining reactions between the moving members and the supports, which are perfectly balanced, of small magnitude and in the absence of collateral moments or axial reactions.

The actuator according to the invention behaves sensibly as if it were arranged all on a single plane, with respect to which the motion input axis (shaft 17) and the motion output axis (shaft 29) perpendicularly exit coaxially and opposite thereto. This very important aspect allows the reduction of the elastic deformations under the load of the moving and fixed components, as well as the absence of collateral elastic loads and deformations thereon. Hereinafter and together with the accuracy of the cycloidal coupling profile and the wide-radius distribution of the pegs, this results in precision and good efficiency, all while maintaining only one lobed disc and a very low eccentricity, as mentioned above of only 0.61 mm, which allows to obtain high transmission ratios and extremely compact dimensioning.

It is further noted that the torque reacting to that transferred in output by the actuator (or reducer) (torque reacting to the useful torque output by the actuator or reducer), is made to react directly on the central crown 26, arranging the actuator so that the three prismatic reliefs 27 obtained on the outside of the central crown 26 (see figure 4 for example) can rest on any fixed reference of the frame supporting and containing the actuator itself or on any other support element thereof.

The aim mentioned in the preamble of the description is thus achieved. The scope of protection of the present invention is defined by the appended claims.

## Claims

1. Actuator for an electric parking brake, wherein the actuator comprises an electric motor (11) and a cycloidal reducer assembly (12) connected downstream of the electric motor (11),
wherein said cycloidal reducer assembly (12) comprises an upper cover (19) and a lower cover (20) containing a cycloidal assembly, which are traversed by a shaft (17) carrying an eccentric formation (18) in an intermediate area thereof at said interposed central crown (26), wherein a central crown (26) is also provided, interposed between said upper cover (19) and lower cover (20), which are thus arranged in a pack,
wherein said interposed central crown (26) is provided with inner teeth (30) facing a gear pair (31) having a smaller diameter than the internal diameter of said teeth (30), wherein, moreover, said gear pair (31) has a thickness not greater than that of the central crown (26) and is arranged therein, wherein said gear pair (31), with the interposition of a bearing (32), is arranged on said eccentric formation (18) of the shaft (17) and is therefore driven to rotate the same shaft (17) with cycloidal motion,
wherein said gear pair (31) provides on a body thereof through holes (33) within which pins (34) are arranged which extend from one side of a disc formation (28) which in turn extends from the other side towards the lower cover (20) in a shaft extension (29). wherein said disc formation (28) and said shaft extension (29) make a real output shaft of the actuator, **characterised in that** said lower cover (20) has a recessed seat (24) housing a guide bearing (25) for said disc formation (28).

2. Actuator according to claim 1 , **characterised in that** said upper cover (19), said lower cover (20) and said interposed central crown (26), which are arranged in a pack, provide lobes (27, 127, 227) radially projecting outwards, within which screws (40) provided with relative washers (41) are inserted, which lock the above-mentioned three elements (19, 20, 26) together.

3. Actuator according to one or more of the preceding claims, **characterised in that** said lower cover (20) supports a first lower end (17i) of the shaft (17) with interposition of a bearing (21i) inside a recessed seat (44) of the disc formation (28).

4. Actuator according to one or more of the preceding claims, **characterised in that** said upper cover (19) supports a drive (15, 16) and houses a bearing (21) supporting a shaft portion near a second upper end (17s) of the shaft (17).

5. Actuator according to one or more of the preceding claims, **characterised in that** a second upper end (17s) of the shaft (17) is keyed to a toothed pulley (16) connected to a toothed belt (15) making an external drive.

6. Actuator according to one or more of the preceding claims, **characterised in that** said through holes (33) of said gear pair (31) are eight in number as well as said pins (34) of said disc formation (28).

7. Actuator according to one or more of the preceding claims, **characterised in that** said disc formation (28) and said shaft extension (29) are made in a single piece.

8. Actuator according to one or more of the preceding claims 1 to 6, **characterised in that** said shaft extension (29) is made in a separate part from said disc formation (28) to which it is made integral.

## Patentansprüche

1. Aktuator für eine elektrische Feststellbremse, wobei der Aktuator einen Elektromotor (11) und eine dem Elektromotor (11) nachgeschaltete zykloidische Untersetzungsgruppe (12) umfasst,
wobei die zykloidische Untersetzungseinheit (12) eine obere Abdeckung (19) und eine untere Abdeckung (20) umfasst, die eine zykloidische Baugruppe enthalten, die von einer Welle (17) durchquert werden, die eine exzentrische Formation (18) in einem dazwischen liegenden Bereich an der dazwischen liegenden zentralen Krone (26) trägt,
wobei auch eine zentrale Krone (26) bereitgestellt wird, die sich zwischen der oberen Abdeckung (19) und der unteren Abdeckung (20) befindet, die somit in einem Paket angeordnet sind,
wobei die zwischengeschaltete zentrale Krone (26) mit inneren Zähnen (30) bereitgestellt ist, die einem Zahnradpaar (31) mit einem kleineren Durchmesser als dem Innendurchmesser der Zähne (30) gegenüberliegen, wobei ferner das Zahnradpaar (31) eine Dicke aufweist, die nicht größer ist als die der zentralen Krone (26) und darin angeordnet ist, wobei das Zahnradpaar (31) unter Zwischenschaltung eines Lagers (32) auf der exzentrischen Formation (18) der Welle (17) angeordnet ist und daher angetrieben wird, um dieselbe Welle (17) mit einer zykloidalen Bewegung zu drehen,
wobei das Zahnradpaar (31) an seinem Körper Durchgangslöcher (33) aufweist, in denen Stifte (34) angeordnet sind, die sich von einer Seite einer Scheibenformation (28) erstrecken, die sich ihrerseits von der anderen Seite in Richtung der unteren Abdeckung (20) in einer Wellenverlängerung (29) erstreckt, wobei die Scheibenformation (28) und die Wellenverlängerung (29) eine echte Ausgangswelle des Aktuators bilden, **dadurch gekennzeichnet, dass** die untere Abdeckung (20) einen vertieften Sitz (24) aufweist, der ein Führungslager (25) für die Scheibenformation (28) aufnimmt.

2. Aktuator nach Anspruch 1 , **dadurch gekennzeichnet, dass** die obere Abdeckung (19), die untere Abdeckung (20) und der dazwischen liegende zentrale Kranz (26), die in einem Paket angeordnet sind, radial nach außen vorstehende Lappen (27, 127, 227) bereitstellen, in die mit entsprechenden Unterlegscheiben (41) versehene Schrauben (40) eingesetzt sind, die die oben genannten drei Elemente (19, 20, 26) miteinander verriegeln.

3. Aktuator nach einem oder mehreren der vorstehenden Ansprüche, **dadurch gekennzeichnet, dass** die untere Abdeckung (20) ein erstes unteres Ende (17i) der Welle (17) unter Zwischenschaltung eines Lagers (21i) innerhalb eines vertieften Sitzes (44) der Scheibenformation (28) trägt.

4. Aktuator nach einem oder mehreren der vorstehenden Ansprüche, **dadurch gekennzeichnet, dass** die obere Abdeckung (19) einen Antrieb (15, 16) trägt und ein Lager (21) beherbergt, das einen Abschnitt der Welle in der Nähe eines zweiten oberen Endes (17s) der Welle (17) trägt.

5. Aktuator nach einem oder mehreren der vorstehenden Ansprüche, **dadurch gekennzeichnet, dass** ein zweites oberes Ende (17s) der Welle (17) mit einer Zahnscheibe (16) verkeilt ist, die mit einem Zahnriemen (15) verbunden ist, der einen externen Antrieb bildet.

6. Aktuator nach einem oder mehreren der vorstehenden Ansprüche, **dadurch gekennzeichnet, dass** die Anzahl der Durchgangslöcher (33) des Zahnradpaares (31) acht beträgt, ebenso wie die Anzahl der Stifte (34) der Scheibenformation (28).

7. Aktuator nach einem oder mehreren der vorstehenden Ansprüche, **dadurch gekennzeichnet, dass** die Scheibenformation (28) und die Wellenverlängerung (29) aus einem einzigen Stück gefertigt sind.

8. Aktuator nach einem oder mehreren der vorstehenden Ansprüche 1 bis 6, **dadurch gekennzeichnet, dass** die Wellenverlängerung (29) in einem von der Scheibenformation (28), mit der sie fest verbunden ist, getrennten Teil ausgeführt ist.

## Revendications

1. Actionneur pour un frein de stationnement électrique, dans lequel l'actionneur comprend un moteur électrique (11) et un ensemble réducteur cycloïdal (12) relié en aval du moteur électrique (11),
dans lequel ledit ensemble réducteur cycloïdal (12) comprend un couvercle supérieur (19) et un couvercle inférieur (20) renfermant un ensemble cycloïdal, qui sont traversés par un arbre (17) portant une structure excentrique (18) dans une zone intermédiaire de celui-ci au niveau de ladite couronne centrale interposée (26), dans lequel une couronne centrale (26) est également prévue, interposée entre ledit couvercle supérieur (19) et le couvercle inférieur (20), qui sont ainsi agencés en un ensemble,
dans lequel ladite couronne centrale interposée (26) est pourvue de dents internes (30) faisant face à une paire d'engrenages (31) ayant un diamètre inférieur au diamètre interne desdites dents (30), et dans lequel, en outre, ladite paire d'engrenages (31) a une épaisseur qui n'est pas supérieure à celle de la couronne centrale (26) et est agencée à l'intérieur de celle-ci, dans lequel ladite paire d'engrenages (31), avec l'interposition d'un roulement (32), est agencée sur ladite structure excentrique (18) de l'arbre (17) et est donc entraînée pour faire tourner le même arbre (17) selon un mouvement cycloïdal,
dans lequel ladite paire d'engrenages (31) présente sur un corps de celle-ci des trous traversants (33) à l'intérieur desquels sont agencées des goupilles (34) qui s'étendent depuis un côté d'une structure en disque (28) qui à son tour s'étend depuis l'autre côté vers le couvercle inférieur (20) dans un prolongement d'arbre (29), dans lequel ladite structure en disque (28) et ledit prolongement d'arbre (29) constituent un véritable arbre de sortie de l'actionneur, **caractérisé en ce que** ledit couvercle inférieur (20) a une assise encastrée (24) logeant un roulement de guidage (25) pour ladite structure en disque (28).

2. Actionneur selon la revendication 1, **caractérisé en ce que** ledit couvercle supérieur (19), ledit couvercle inférieur (20) et ladite couronne centrale interposée (26), qui sont agencés en un ensemble, prévoient des lobes (27, 127, 227) faisant saillie radialement vers l'extérieur, à l'intérieur desquelles sont insérées des vis (40) pourvues de rondelles (41) correspondantes, qui verrouillent les trois éléments susmentionnés (19, 20, 26) ensemble.

3. Actionneur selon l'une ou plusieurs des revendications précédentes, **caractérisé en ce que** ledit couvercle inférieur (20) supporte une première extrémité inférieure (17i) de l'arbre (17) avec interposition d'un roulement (21i) à l'intérieur d'une assise encastrée (44) de la structure en disque (28).

4. Actionneur selon l'une ou plusieurs des revendications précédentes, **caractérisé en ce que** ledit couvercle supérieur (19) supporte un entraînement (15, 16) et loge un roulement (21) supportant une partie d'arbre à proximité d'une seconde extrémité supérieure (17s) de l'arbre (17).

5. Actionneur selon l'une ou plusieurs des revendications précédentes, **caractérisé en ce qu'**une seconde extrémité supérieure (17s) de l'arbre (17) est clavetée sur une poulie dentée (16) reliée à une courroie dentée (15) assurant un entraînement externe.

6. Actionneur selon l'une ou plusieurs des revendications précédentes, **caractérisé en ce que** lesdits trous traversants (33) de ladite paire d'engrenages (31) sont au nombre de huit tout comme lesdites goupilles (34) de ladite structure en disque (28).

7. Actionneur selon l'une ou plusieurs des revendications précédentes, **caractérisé en ce que** ladite structure en disque (28) et ledit prolongement d'arbre (29) sont faits d'un seul tenant.

8. Actionneur selon l'une ou plusieurs des revendications 1 à 6 précédentes, **caractérisé en ce que** ledit prolongement d'arbre (29) est fait dans une pièce séparée de ladite structure en disque (28) à laquelle il est solidaire.
